(19) Europäisches Patentamt / European Patent Office / Office européen des brevets

(11) **EP 3 755 961 B1**

(12) **EUROPEAN PATENT SPECIFICATION**

(45) Date of publication and mention
of the grant of the patent:
**01.06.2022 Bulletin 2022/22**

(21) Application number: **19707335.6**

(22) Date of filing: **20.02.2019**

(51) International Patent Classification (IPC):
**F28D 20/02** $^{(2006.01)}$   **A47J 37/06** $^{(2006.01)}$
**H02S 10/00** $^{(2014.01)}$

(52) Cooperative Patent Classification (CPC):
**F28D 20/02; F28D 20/026;** H02S 10/00;
Y02E 10/40; Y02E 10/50; Y02E 60/14; Y02E 70/30

(86) International application number:
**PCT/EP2019/054204**

(87) International publication number:
**WO 2019/162320 (29.08.2019 Gazette 2019/35)**

(54) **SOLAR COOKING APPARATUS WITH HEAT STORAGE CAPACITY**

SOLARKOCHGERÄT MIT WÄRMESPEICHERKAPAZITÄT

APPAREIL DE CUISSON SOLAIRE AVEC CAPACITÉ DE STOCKAGE DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2018 GB 201802915**

(43) Date of publication of application:
**30.12.2020 Bulletin 2020/53**

(73) Proprietor: **Sunphase AS**
**0160 Oslo (NO)**

(72) Inventor: **SAUAR, Erik**
**0860 Oslo (NO)**

(74) Representative: **Onsagers AS**
**P.O. Box 1813 Vika**
**0123 Oslo (NO)**

(56) References cited:
**EP-A1- 0 221 575      WO-A1-2011/009200
WO-A1-2011/009201    WO-A1-2017/205864**

**DE-A1- 10 005 915      DE-A1-102006 059 533
JP-A- S57 207 793       US-A- 3 938 497
US-A- 4 841 946         US-A- 4 983 798
US-A1- 2016 264 018**

- **Various: "Solar Cookers in the Third World (GTZ, 1990, 228 p.): Appendix 1: Solar Cooking Devices: Heat-accumulating solar cookers" In: "Solar Cookers in the Third World (GTZ, 1990, 228 p.): Appendix 1: Solar Cooking Devices: Heat-accumulating solar cookers", 31 December 1990 (1990-12-31), GTZ Gesellschaft für technische Zusammenarbeit, XP055144175, page 5 - page 6; figure 44**
- **DATABASE EPODOC [Online] EUROPEAN PATENT OFFICE, THE HAGUE, NL; XP002792469, Database accession no. CN-201610869063-A -& CN 106 333 515 A (SHANGHAI YUANPENGJIZHENG RESTAURANT MAN CO LTD) 18 January 2017 (2017-01-18)**
- **DATABASE EPODOC [Online] EUROPEAN PATENT OFFICE, THE HAGUE, NL; XP002790603, Database accession no. CN-02205463-U -& CN 2 518 037 Y (KONG WEIMING [CN]) 23 October 2002 (2002-10-23)**

EP 3 755 961 B1

## Description

The present invention relates to a photovoltaic driven cooker having storage capacity of heat.

## Background

More than 1 billion people in the world live in areas without access to grid electricity. More than 2 billion people do not have access to clean cooking technology and do their cooking of food on open fire with no or inadequate venting of the smoke gas. The persistent exposure to combustion gases is a serious environmental and health problem. It is thus a need for cooking capabilities which are not too costly, and which do not rely on burning fire wood, coal or other combustion fuels as energy supply.

Nearly all the people with poor access to clean cooking have good solar insolation conditions making sun light an abundant and available source of energy.

## Prior art

The energy in sun light may be harnessed thermally or by the photovoltaic effect. The simplest and most efficient harnessing of energy from sunlight is to absorb the sunlight in a material having a low albedo. This approach has the potential of capturing almost all energy of the incident sunlight and converting it to thermal energy. By using a mirror to focus and concentrate incident sunlight from a relatively large area onto a receiving area or object, the sunlight may heat the receiving area/object to several hundred degrees Celsius which is sufficient to cook or bake food.

There are known solar cookers and ovens using mirrors or similar reflective surfaces to harness incident sunlight to cook and/or bake food. One example of such a solar cooking apparatus is disclosed in e.g. document US 3938497. Such solar cookers have the benefit of having a relatively simple and inexpensive construction using free energy, making them very cheap apparatuses for cooking/baking food suited for use by low-income residents. They also have the benefit of obliviating the need for using open-fire to heat food and thus potentially significantly improving the in-house environment and health conditions. However, they have no heat storage capacity and stops working immediately if the sunshine is interrupted. They can only operate in direct sunshine, which significantly constrains indoor use and the very common use in late afternoons. This problem may be alleviated by using a heat storage material to accumulate and store solar energy until later use.

From CN 102 597 649 A, it is known a solar cooking device comprising a solar heat collector to collect and store solar heat, a heat storage and conducting material partially filling said solar heat collector and a set of solar cooking utensils. The utensil has an inner wall which is thermally connected to the heat storage, conducting material and the solar hear collector, so that the solar energy can be collected to cook food. The utensil also has a removable part for opening and closing said utensil during cooking. In one example embodiment, the heat storage material is a phase-change material and there is an electric heating element located in the heat storage material.

From US 4 619 244 it is known a solar oven having a heating chamber mounted on a first axis of rotation, and which revolves through an angle OMEGA at a constant angular velocity. The first axis of rotation is adjustable through an angle theta to the horizontal according to the geographic latitude, and through an angle phi to the axis of rotation according to the season. The heating chamber is an insulated cavity with a small aperture. The sun's rays are focused along a second axis normal to the first axis through a small aperture into the heating chamber. The heating chamber contains a phase change material which melts at about 180 °C, which provides heat at that temperature after sundown. In one embodiment, a structure includes a platen to supply heat to a cooking utensil. The platen has heat-conducting ribs attached to its bottom side, which dip into the phase-change material contained in an enclosure under the platen. The surface of the platen is maintained level by gravity. A major practical challenge with such oven in a single household, however, is the maintenance challenges related to keeping the solar tracking function sufficiently precise and operational at an acceptable cost.

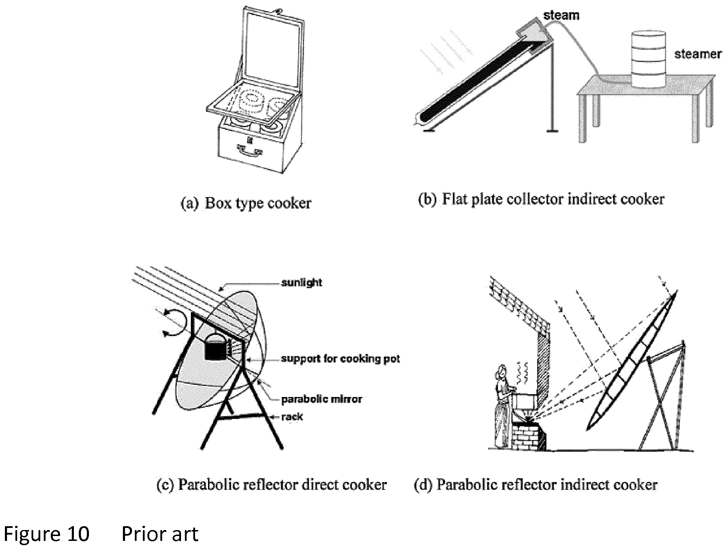

Panwar et al. [4] provides a good overview of the prior art as shown in figure 10, and the various ways of channeling solar irradiative heat directly or through an interim storage into energy for cooking purposes. The simplest solution is the "box type collector" where a glass insulation allows solar irradiatiation to pass through the glass and into the collector, while the glass is insulating reasonably well the heat that has been captured and stored. The box type collector can be made with or without mirrors to collect more irradiation. "The flat plate collector" has a separate panel collecting solar irradiation and converting it to steam, and then transferring the steam to the cooking utility. The "parabolic reflector direct cooker" has an advanced parabolic mirror that reflects irradiation from a larger area by the use of a parabolic mirror so that a strong concentrated irradiation can be achieved. The "parabolic reflector indirect cooker" uses the same parabolic mirror but directs the sunlight onto a heat storage medium that afterwards or elsewhere (indoors) is used for cooking. Unfortunately, none of the above methods have been able to provide a low cost, reliable cooking method with limited needs for maintenance and which allows the user to decide freely when to cook.

From EP 0 221 575 A1, it is known a cooking apparatus comprising a first liquid tight container having a bottom wall, side wall, and an upper wall enclosing a first inner chamber of the container, and a first phase-change material located inside and substantially filling the first inner chamber of the first container, one or more electric resistance heating elements electrically connected to a source of electric energy and being in thermal contact with the phase-change material(s).

Lameck NKhonera et al. [5] has investigated finned thermal box-type collectors for solar cooking at 150 - 200 °C using the pentaerythritol as phase-change material (PCM) for storing latent heat collected from irradiation. The study investigated the performance of the thermal storage units as function of the volume ratio of PCM : fin in a cookstove designed for use within 1 to 4 hours after being fully charged by the sun. The article discloses a thermal storage unit consisting of an aluminium container being filled with pentaerythritol and a set of aluminium fins standing edgewise in parallel, and which in their upper end is attached to an aluminium top plate having a set of electric heating elements incorporated therein in order to simulate solar radiative heating providing a surface temperature of 220 °C under a glass. The thermal storage unit was insulated with Rockwool on the sides and in the bottom.

**Objective of the invention**

The main objective of the invention is to provide a low-cost and reliable solar energy and optionally net electric energy driven cooking apparatus having heat storage capacity suitable for use in areas where the grid electricity is not reliably present every day.

**Description of the invention**

The present invention utilizes a phase-change material to store thermal energy combined with a photovoltaic panel and an electric resistance heating element as energy source.

Thus, in a first aspect, the present invention relates to a cooking apparatus comprising:

- a first liquid tight container (1) having a bottom wall (1a), side wall (1b), and an upper wall (1c) enclosing a first inner chamber (2) of the container, where:

  - the upper wall (1c) comprises at least one substantially horizontally oriented cooking zone (4) made of a thermally conductive material, and
  - the bottom wall (1a), the side wall (1b), and the upper wall (1c) except for the at least one cooking zone (4) comprises a first thermal insulation (3), and

- a first phase-change material (8) located inside and substantially filling the first inner chamber (2) of the first container (1),
- one or more electric resistance heating element(s) (9) electrically connected to a source of electric energy and being in thermal contact with the phase-change material(s),

characterised in that:

- the cooking zone (4) is integrated with and forming a part of the upper wall (1c) and is in direct thermal contact with the first phase-change material (8), or is arranged onto the upper wall (1c), and in that the cooking apparatus further comprises:
- a releasable lid (7) made of a thermally insulating material adapted to cover and thermally insulate each of the at least one cooking zone (4).

In a further aspect, the invention relates a cooking apparatus comprising:

- a first liquid tight container (1) having a bottom wall (1a), side wall (1b), and an upper wall (1c) enclosing a first inner chamber (2) of the container, where:

  - the upper wall (1c) comprises at least one substantially horizontally oriented cooking zone (4) made of a thermally conductive material, and
  - the bottom wall (1a), the side wall (1b), and the upper wall (1c) except for the at least one cooking zone (4) comprises a first thermal insulation (3), and

- a first phase-change material (8) located inside and substantially filling the first inner chamber (2) of the first container (1),

- one or more electric resistance heating element(s) (9) electrically connected to a source of electric energy and being in thermal contact with the phase-change material(s),

characterised in that the cooking apparatus further comprises:

- a second inner chamber (12) located inside the first container just below and in contact with the cooking zone (4) or the upper wall (1c), and which is filled with a second phase-change material (13) which exhibits a liquid-solid phase-change and has a lower phase-transition temperature than the first phase-change material (8), and

- a releasable lid (7) made of a thermally insulating material adapted to cover and thermally insulate each of the at least one cooking zone (4).

The term "phase-change material" as used herein, means any chemical compound or mixture of chemical compounds going through a reversible phase-change enabling absorbing or releasing a useful amount of latent heat, preferably more than 100 kJ/kg phase-change material, at a temperature in the range from 80 to 500 °C, preferably from 90 to 450 °C, more preferably from 100 to 400 °C, and most preferably from 110 to 300 °C. The phase-change may either be a solid-solid phase change, but preferably a solid-liquid phase change. The invention may apply any phase-change material known to the skilled person having a phase-transition temperature suitable for use in a cooking apparatus.

Examples of suited solid-liquid phase-change materials include, but are not limited to; inorganic salts such as e.g. $NaNO_3$ (310 °C, 174 kJ/kg), $NaNO_2$ (282 °C, 212 kJ/kg), $MgCl_2·6H_2O$ (117 °C, 168,6 kJ/kg), NaOH (318 °C, 158 kJ/kg), KOH (360 °C, 167 kJ/kg), $KNO_3$ (337 °C, 116 kJ/kg), $LiNO_3$ (261 °C, 370 kJ/kg), and mixtures thereof; mixtures (by weight) of salts such as e.g. 26.8 % NaCl and NaOH (370 °C, 379 kJ/kg), NaOH and 7.2 % $Na_2CO_3$ (283 °C, 340 kJ/kg), NaCl and 5 % $NaNO_3$ (284 °C, 171 kJ/kg), 49 % $LiNO_3$ and $NaNO_3$ (194 °C, 265 kJ/kg); 31,9 % ZnCl and KCl (235 °C, 198 kJ/kg); organic compounds such as erythritol (IUPAC-name; (2R,3S)-butane-1,2,3,4-tetraol, 121 °C, 339 kJ/kg), or acetanilide (IUPAC-name; N-phenylacetamide, 114.3 °C, 222 kJ/kg), or d-mannitol (IUPAC name; (2R,3R,4R,5R)-Hexane-1,2,3,4,5,6-hexol; 167°C, 310 kJ/kg), or dulcitol/galactitol (IUPAC name; (2R,3S,4R,5S)-hexane-1,2,3,4,5,6-hexol; 188 °C, 350 kJ/kg). The temperatures and kJ/kg figures set in parenthesis above are the melting point and heat of fusion, respectively, of the phase-change material.

Examples of suited solid-solid phase-change materials include, but are not limited to; pentaerythritol (IUPAC-name; 2,2-bis(hydroxymethyl)propane-1,3-diol, 184.2 °C, 222.5 kJ/kg), or pentaglycerine (IUPAC-name; 2-(hydroxymethyl)-2-methylpropane-1,3-diol, 89 °C, 139 kJ/kg); mixtures (in molar %) of pentaerythritol (PE), trimethylol ethane (TME) and neopentyl glycol (NPG) of e.g. 30 PE, 10 TME, and 60 NPG (127 °C); 45 PE, 45 TME, and 10 NPG (109 °C), 45 PE, 10 TME, and 45 NPG (140 °C), or 70 PE, 15 TME, and 15 NPG (158 °C). Neopentyl glycol has IUPAC-name 2,2-Dimethylpropane-1,3-diol, and trimethylol ethane has IUPAC-name 2-(hydroxymethyl)-2-methylpropane-1,3-diol. The temperatures and kJ/kg figures (if given) set in parenthesis above are the solid-solid phase-transition temperature and heat of fusion, respectively, of the phase-change material.

The term "substantially horizontal" as used herein, is to be interpreted as approximately horizontal. The cooking zone of the apparatus should be able to heat the food content of a kettle, pot, frying pan, casserole etc. being placed onto the cooking zone without noteworthy risk of sliding off or spilling any of the food content to be heated. I.e., the upper surface of cooking zone of the container does not need to be perfectly horizontal but may function well with relative small inclinations up to e.g. 10°, or maybe up to 20°, relative to the earth's gravity field. The upper surface (5) of the substantially horizontal cooking zone (4) may advantageously be planar.

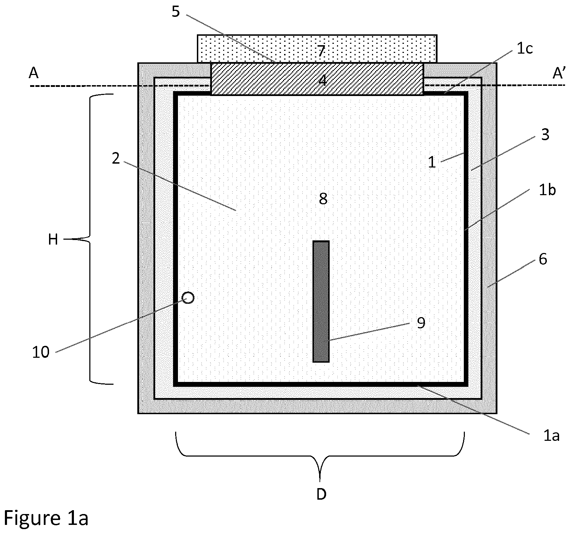

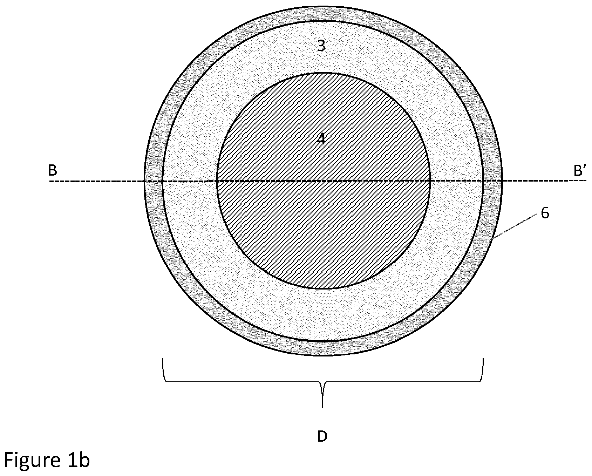

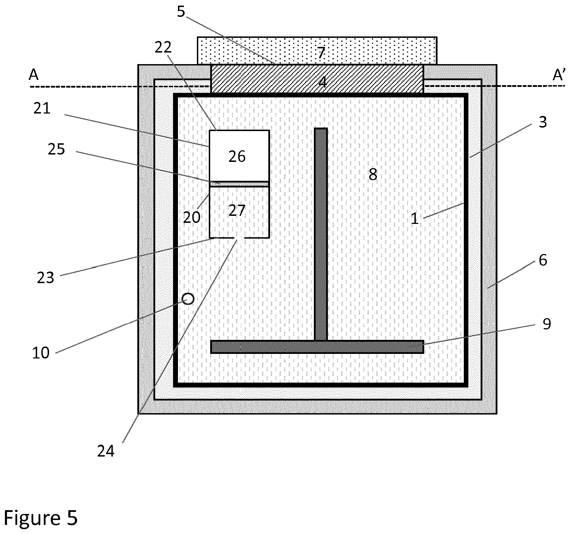

The term "thermally conductive cooking zone" as used herein, means that the material constituting the cooking zone is conducting heat at a sufficient rate to enable a cooking vessel, such as kettle, pot, frying pan, casserole etc., being placed on the cooking zone, to become sufficiently heated by heat being conducted from the phase-change material below the cooking zone to cook food, boil water etc. in the cooking vessel. The cooking zone (4) is integrated with and forming a part of the upper wall (1c) such as shown in e.g. figure 1 or be arranged onto the upper wall (1c) such as shown in figure 5. The term "the upper wall (1c) comprises at least one substantially horizontally oriented cooking zone (4)" as used herein, encompasses thus a cooking zone (4) laid onto the upper wall (1c) and a cooking zone (4) being made an integral part of the upper wall (1c) and thus in direct contact with the first inner chamber (2) of the container (1).

The material of the cooking zone may be made from a single solid material having the mechanical resilience to support the cooking vessel and the thermal resilience to withstand the temperatures of the phase-change material inside the container, or it may be a mixture of, a laminar structure etc. of two or more of such materials. There is no general lower limit for the thermal conductivity of the cooking zone material enabling cooking food. This depends on the heat of fusion of the phase-change material being applied, the temperature of the phase-change material, the shape and dimensions of the cooking vessel, the thickness of the cooking zone material, the amount of food to be cooked, time frame of the cooking process, and other factors.

The invention may apply any material known to the skilled person suited for use as cooking zone. In practice, the material of the cooking zone may advantageously have a thermal conductivity, of at least 1 W/mK, preferably of at least 10 W/mK, more preferably of at least 20 W/mK, more preferably of at least 30 W/mK, and most preferably of at least 50 W/mK. Examples of suited thermal conductive materials include, but are not limited to; metals such as Fe, Cu, Al, Zn, Sn, W, and alloys thereof such as e.g. bronze, brass, constantan, various steel alloys, pinchbeck; ceramics such as aluminium oxide, crystalline silicon dioxide, porcelain, Pyrex glass, etc.

The cooking zone should be in sufficient thermal contact with the phase-change material to enable supplying the cooking zone with the heat energy required for cooking food. However, the phase-change material may undergo a volume change when shifting between its solid and liquid phases. Some materials increase in volume when going from a solid to a liquid phase, while others decrease in volume. This may lead to inadequate thermal contact between the material of the cooking zone(s) and the underlying phase-change material functioning as the cooking zone's heat reservoir. Thus, in one example embodiment, the invention may advantageously apply a phase-change material exhibiting a relatively small volume change, such as e.g. less than 15 %, and more preferably less than 7 %. It is further, in one example embodiment, preferred to apply a phase-change material having a smaller volume in the solid phase as compared to its liquid phase, and in this manner ensuring that the phase-change material fills the entire inner volume of the container when in liquid state, and thus obtain an excellent thermal contact with the cooking zone(s). A material with slightly larger volume in liquid phase will also distribute the added pressure of expansion more evenly onto the container surface and thereby be more likely to last for a long time.

Alternatively, in one example embodiment, the thermal contact between the phase-change material and a cooking zone may be obtained by providing one or more elongated members extending from the underside of the cooking zone downward into the bulk phase of the phase-change material, and thus functioning as a heat bridge thermally connecting the cooking zone to the underlying phase-change material. The elongated member may advantageously be made of material having good thermal conductivity, such as e.g. the same materials listed above for the cooking zone. In the example embodiment where the elongated members and the cooking zone are made of aluminium, they may advantageously be manufactured simultaneously by extrusion. Alternatively, the elongated members may be made of a (second) solid-solid phase-change material or being hollow and filled with a phase-change material, preferably a (second) phase-change material having a higher phase-transition temperature than the first phase-change material.

In another example embodiment, the volume change in the phase-change material may be compensated by having one or more expansion chambers partly filled with phase-change material and being in fluid communication with the liquid phase-change material in the bulk of the first inner chamber of the container. The partly filled expansion chamber may compensate eventual volume changes in the phase-change material inside the first inner chamber of the container by adjusting the amount of liquid phase-change material being contained in the expansion chamber.

The expansion chamber may advantageously comprise an inner cylindrically symmetric space being confined by a cylinder-shaped side wall, a first end wall and a second end wall having an opening, where the first and second end walls are located at opposite ends of the cylinder-shaped side wall. The expansion chamber may advantageously further comprise a slide-able piston located inside the inner cylindrically symmetric space and which divides the inner space into a first and second expansion chamber which will change their volume according to the position of the slide-able piston. By having the first inner expansion chamber filled with e.g. a moderately pressurised gas which constantly seeks to press the slide-able piston towards the opening at the second end wall, the expansion chamber will constantly adjust its content of phase-change material in the second inner expansion chamber according to the volume of the phase-change material of the cooker apparatus when the phase-change material is in its intended working state. I.e. when the phase-change material is sufficiently hot to either be entirely in the liquid state or predominantly in the liquid state with some solidified material (and as long as the solidified material does not block the opening in the second end wall). It is envisioned that the slide-able piston of the expansion chamber may be pushed towards the opening by a spring coil, either alone or in combination with pressurised gas, or by any other mean for applying a constant push on a slide-able piston.

The slide-able piston enables containing the gas phase in the first chamber regardless of the orientation of the expansion chamber. However, if the expansion chamber is oriented vertically and having its opening at the bottom, the gas inside the expansion chamber has nowhere to escape such that a slide-piston is unnecessary and may be omitted. In the latter case, the expansion chamber may advantageously be located in the upper part of the inner expansion chamber of the first container having its opening facing downwards, and the main body of the expansion chamber may protrude upwards at least a part through the upper wall of the first container, alternatively through the upper wall (1c) of the first container (1) and at least a distance into the first thermal insulation (3), or alternatively through the upper wall (1c) of the first container (1) and further through the first thermal insulation (3) and a distance into (if present) a second thermal insulation (6). In this case, the second chamber of the expansion chamber may advantageously comprise an electric heating element to prevent phase-change material from solidifying. During expansion and contraction, the liquid phase-change material may then move up and down inside the expansion chamber, such that a piston is not required.

In this example embodiment, it may advantageously be applied a phase-change material which has its lowest density in liquid state, and the expansion chamber may advantageously comprise a resistive heater.

The expansion chamber may also advantageously be located inside the thermal insulation above the upper ceiling of the main container of phase change materials. In this design a small resistive heater may advantageously be placed inside the expansion chamber and extending down to the main heating element so that when heat is added to the chamber and an expansion starts, the liquid in the container is in direct contact with the expansion chamber.

To reduce the risk of solidified phase-change material blocking the function of the expansion chamber, it may advantageously be located at an area in the first inner chamber (2) of the container (1) of the solar cooker which solidifies late during use of the solar cooker. This location will depend on the design and dimensioning of the solar cooker but will generally be at a lower position in the container.

The term "thermal insulation" as used herein, means that the wall of the first container not constituting the cooking zone is sufficiently thermally insulated towards the surrounding environment of the first container to enabling storing heat energy for cooking food for a time period of at least a couple of hours, preferably up to at least 12 hours, and most preferably up to at least 24 hours. The thermal insulation may be obtained by the walls of the first container as such by being made of a sufficiently thick layer of a heat insulating material, or by having the walls of the first container which may be made of a non-insulating or a thermal insulating material coated/covered/applied on their outside with one or more layers of heat insulating materials, or a combination thereof. There is no absolute boundary for thermal resistance across the thermal insulation of the first container to obtain the objective of at least 24 hours storing capacity. This depends on the heat of fusion of the phase-change material being applied, the temperature of the phase change material, amount of the phase-change material in the apparatus, and the surface to volume ratio of the container, and other factors. However, in practice, the specific thermal resistivity, R, across the wall of the container may advantageously be at least 10 mK/W, preferably of at least 12 mK/W, more preferably of at least 15 mK/W, more preferably of at least 20 mK/W, and most preferably of at least 25 mK/W. With this range of thermal resistivity, the heat insulating material has a thermal conductivity in the range from 0.04 W/mK to 0.10 W/mK, and the total thickness of the heat insulation layer(s) required to obtain the above objective becomes in the in the range of from 10 to 30 cm. The invention may apply any material as thermal insulation known to the skilled person having such thermal conductivity, the sufficient mechanical strength to support the phase-change material, and the thermal resilience to withstand the maximum temperatures at which the phase-change material is heated. Examples of suited thermal insulating materials include, but are not limited to; calcium silicate, cellular glass, fiberglass, mineral wool, rock wool, ceramic foam, polyurethane, foamed polyurethane (such as e.g. commercially available under the trademark Puren), and other porous materials having air filled pores, etc.

In one alternative embodiment, the thermal insulation of the first container may be obtained by having the side wall, lower and upper wall formed by at least two concentric similarly shaped containers where the first container is the inner container and the one or more outer container is/are somewhat larger dimensioned such that there is a gap between the inner and the second, and eventually the second and the third concentric containers etc. The gap between the inner and outer concentric containers may either be filled with one or more heat insulating material mentioned above, or being an evacuated zone having a gas at low pressure, which advantageously may be at gas pressure of less than 25 kPa, preferably less than 1 kPa. In the latter alternative, the heat insulation is obtained by the gas filling and confined in the space, similar as the heat insulation of a laminar window glass.

The invention may apply any material in the walls of the first container, and optionally the outer container, known to the skilled person to have the required mechanical strength and thermal resistance to be applicable as load carrying structure of the solar cooking apparatus. Examples of suited materials for the inner and optionally the outer container walls include, but is not limited to; glass, polymers, or a metal such as steel, aluminium etc.

In one example embodiment, the invention may apply container(s) made in a flexible material, such as a polymer, for containing the phase-change material allowing the container(s) to expand and shrink for every usage in accordance with the density change associated with the phase change. In this example embodiment, the surrounding thermal insulating material may advantageously also be flexible to encompass the expansion of the first container, or there may advantageously be space available inside the thermal insulating material.

In another example embodiment, the invention may apply container(s) that can tolerate pressure variations, and which are not fully filled with phase change material. This opens the opportunity for a variation in the gas pressure in the container to absorb the variations in the volume of the phase change material.

The invention may apply any electric heating element known to the skilled person which enables heating the phase-change material to its intended heat storing temperature, and which can withstand the chemically environment in the heated phase-change material. The source of electric energy may be any available source, including small-scale wind power, electric power from a photovoltaic panel, grid electricity, etc.

The term "electric resistance heating element being in thermal contact with one or more phase-change material(s)" as used herein, means that the inner space of the container of the cooking apparatus may contain more than one phase-change materials and that there is at least one electric heating element located in direct contact with or inside the inner space of the container at a position enabling the element to heat, preferably all phase-change material being present, but at least a major part of phase-change material inside the container to at temperature at which the phase-change material is liquid. If only one heating element is applied, its location may advantageously be at the lower part of the first inner chamber (2) to enable diffusing the supplied heat into the bulk part of the phase-change material by thermal convection. In this example embodiment, an eventual expansion chamber may advantageously be located in proximity of the heating element. Alternatively, there may be applied two or more heating elements distributed inside the inner space of the container to ensure heating all or most of the phase-change material. For some purposes one may possibly also want to add an electrical heating element in the cooking zone (4) itself in order to boost the heat flux being used to cook - either to create an extra high heat flux or because most of the heat stored in the phase-change material has already been released.

In order to stimulate efficient heat transfer and melting of the solid phase by convection the largest surfaces of the heating element(s) may be designed to be vertically oriented so that an upward continuous flow along the heating element surface is initiated when heat is added to a fully solidified chamber. A downward counter-flow along the non-molten solid phase will then also be initiated as a secondary consequence, thereby initiating effective heat transfer from the heating element to the solid bulk by convection in the partially liquified volume.

The cooking zone (cooking plate) may advantageously further comprise a lifting mechanism adapted to, in a first position, to be fully embedded and retracted into the cooking zone and in at least a second position extends a distance above the upper surface of the cooking zone. The lifting device enables regulating the heating effect of the cooking zone by lifting a cooking tool, saucepan/cooking pot/frying pan, etc., from a first position where heat receiving surface of the cooking tool is in physical contact with the upper surface of the cooking zone and thus receives the maximum obtainable heating effect from the cooking apparatus to at least one second position where the cooking tool is suspended onto and lifted a distance above the upper surface of the cooking zone by the lifting mechanism. The invention may apply any known and conceivable lifting mechanism which enables lifting and hold a cooking tool a distance above the upper surface of the cooking zone, such as e.g. a set of elongated members fitted into grooves in the cooking zone and which in the first position is horizontally oriented to allow the cooking toll to rest on the surface of the cooking zone, and which can be synchronically turned to lift the cooking tool a distance up from the cooking zone. Another example may be a set of vertically oriented (i.e. normal to the upper surface of the cooking zone) toothed racks which may be vertically moved by one or more pinion wheels. One may for example let the cooking zone consist of a stationary part with openings inside and a movable part that rests in these openings whenever maximum heat flux is wanted. If less heat transfer is desired, the user may turn a knob that gradually raises the movable part so that there no longer is direct contact between the stationary part of the zone and the pot, but only indirectly through the movable part. Raising the port even further, will further lower the heat transfer.

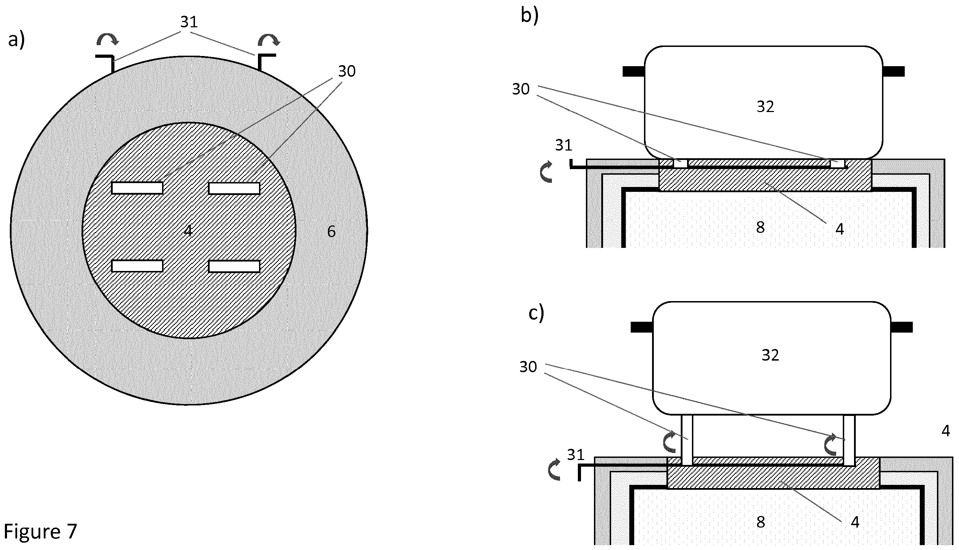

An example embodiment of a lifting mechanism is schematically illustrated in figure 7a) to 7c). Figure 7a) is seen directly from above and may be any of the example embodiments shown in figures 1 to 6. The cooking zone (4) is having four rod members (30) positioned in their first position. i.e. oriented horizontally and fully retracted into groves in the cooking zone (4). A cooking tool (32) placed on the cooking zone (4) will when the rod members (30) are in this position be resting on the upper surface of the cooking zone (4) as shown in figure 7 b). The rod members (30) are in one end pivotably attached to rods (31) extending through the insulation (3, 6) and a distance outside the cooking apparatus to enable an operator to manually twisting the rods (31) to raise one end of the rod members (30) up from its groove in the cooking zone and lifting a cooking tool (32) placed thereon, as illustrated in figure 7 c). In another example embodiment, the rod (31) may be attached to a pinion wheel which causes a vertically oriented toothed rod member (30) to be vertically displaced between a fully retracted position into the cooking zone (4) to be protruding a distance up from the upper surface of the cooking zone (4).

The cooking apparatus according to any aspect of the invention may additionally comprise an electric heating element in direct thermal contact with the cooking zone (4) and in electrical connection with a source for electric energy to enable heating the cooking plate electrically when electric energy is accessible. The electric heating element may advantageously be an electric resistance heater (15) embedded into the cooking zone (4).

**List of figures**

Figure 1a is a cut cross-view as seen along the dotted line marked B - B' in figure lb, schematically illustrating an example embodiment of the invention.

Figure 1b is a cut cross-view as seen along the dotted line marked A - A' in figure la, schematically illustrating the same example embodiment of the invention as shown in figure 1a.

Figure 2 is a similar cut view as shown in figure 1a of a second example embodiment of the invention.

Figure 3 is a similar cut view as shown in figure 1a of a third example embodiment of the invention.

Figure 4 is a similar cut view as shown in figure 1a of a fourth example embodiment of the invention.

Figure 5 is a similar cut view as shown in figure 1a of a fifth example embodiment of the invention.

Figure 6 is a similar cut view as shown in figure 1a of a sixth example embodiment of the invention.

Figures 7 a to c are a schematically presentation of an example embodiment of a lifting mechanism for adjusting the heat transfer rate from the cooking zone to a cooking tool.

Figures 8 a to c are schematically presentations of an eighth example embodiment of the invention.

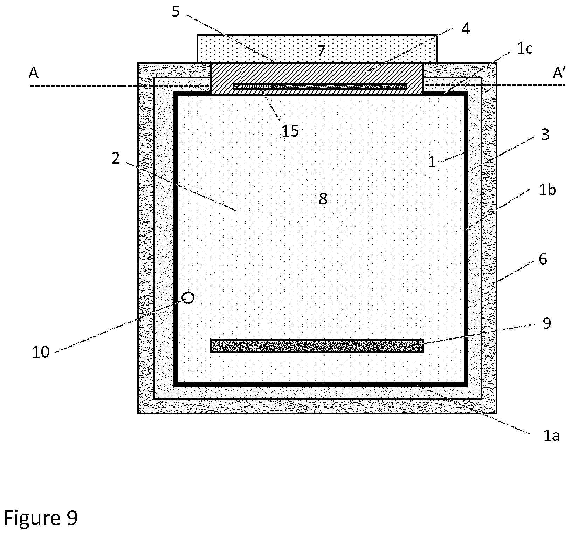

Figure 9 is a schematically presentation of a further example embodiment of the invention.

Figure 10 is a facsimile of figure 3 from Panwar et al. [4] showing state of the art of solar cooking.

**Example embodiments of the invention**

The invention will be explained in more detail by way of example embodiments.

First example embodiment of the invention

The first example embodiment of the invention is schematically illustrated in figures 1a and 1b. Figure 1a is a cut cross-section view seen from the side taken along the dotted line marked B - B' in figure 1b, while figure 1b is a cut cross-section view seen from above taken along the dotted line marked A - A' in figure Ia.

The first container of this example embodiment is shaped as a vertically standing cylinder of inner diameter D and inner height H. The cylindric container (1) is made up of a cylinder section (1b) being closed at the bottom by a disc shaped bottom (1a). A ring-shaped disc (1c) constitutes the top of the cylindric container and has a concentric circular opening into which a circular disk (4) constituting the cooking zone is located and made fluid tight integral with the ring-shaped disc (1c). The circular disc (4) is made of a thermally conductive material, such as e.g. an aluminium alloy, steel etc. The bottom (1a), cylinder section (1b) and the ring-shaped disk (1c) may be made of e.g. a thin steel or polymer casing of e.g. 1 mm thickness. A first layer of a thermal insulating material (3) is applied to the outer side of the bottom (1a), cylinder section (1b) and the ring-shaped disk (1c). The material of the first thermal insulation (3) may be e.g. rock wool. When not in use to cook food, the cooking zone (4) is covered/closed by a lid (7) made of a thermal insulating material.

The inside of the container is filled with a phase-change material (8), which for example may be a mixture of NaOH and 7.2 % by weight $Na_2CO_3$, based on total weight of the mixture. The phase-change material may be mixed with a liquid to enable efficient heat transport inside the container also when the major part of the phase-change material is in the solid state.

An electric resistance heating element (9) is placed in the phase-change material (8) and in the proximity of the bottom (1a) to heat the phase-change material to above its phase-change temperature, which in this example embodiment is 283 °C. The electric resistance heating element (9) may in this example embodiment advantageously be shaped as planar plate or as a cross of plates fixed vertically in the centre of the cylinder (1) and at a distance above the bottom (1a), and it may advantageously be equipped with electric conductors (not shown) electrically connecting the element to an appliance plug socket (not shown) for enabling feeding electric energy to the heating element.

The cooking apparatus may advantageously further comprise an optional temperature sensor (10) located in the phase-change material (8) which terminates the electric energy supply to the heating element (9) when the temperature of the phase-change material reaches a predetermined temperature, which in this example embodiment may be set to e.g. 300 °C, and naturally at another temperature if another phase-change material is being applied. The phase-change material (8) may either be exhibiting a solid-solid phase-change or a liquid-solid phase-change.

This example embodiment further comprises a second thermal insulation (6) covering the first thermal insulation(3). The second thermal insulation (6) is optional but may advantageously be made of a rigid solid material, such as e.g. cellular concrete or other foamed ceramic material, to provide both an increased heat insulation of the container and providing load carrying capacity to the cooking apparatus enabling it being used without any additional load carrying or mechanically stabilising structures. It may simply be placed onto a floor and being used as it is to cook food (after heating up the phase-change material). This example embodiment has an especially simple construction enabling an especially low-cost manufacturing of the cooking apparatus. Remark that the heat insulating walls may consist of one or more layers of insulating materials since different materials may be cost effective at different temperatures.

Second example embodiment of the invention

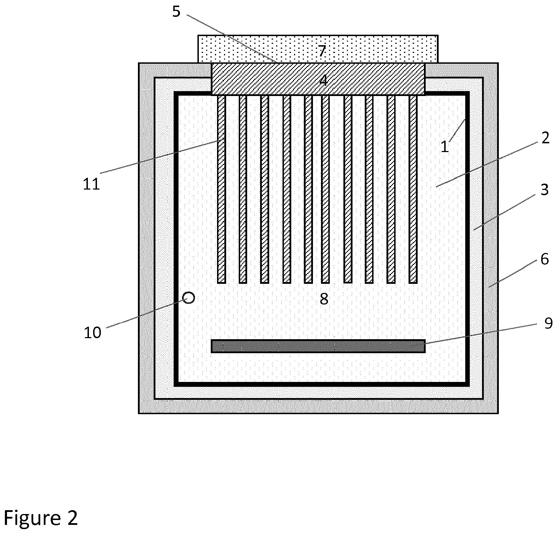

The second example embodiment of the invention, shown in figure 2, is similar to the first example embodiment, except that in order to alleviate a potential problem of gradually poorer thermal contact between the cooking zone (4) as phase-change material just beneath the cooking zone (4) is cooled due to heat being transferred to the food being cooked, there is one or more elongated members (11) extending from the cooking zone (4) a downwardly distance into the bulk of the first inner chamber (2) to function as heat conducting bridge(s) transferring heat from lower lying and thus hotter phase-change material (8) to the cooking zone (4). This example embodiment has the advantage of enabling a prolonged period of relatively high heat transfer to the cooking zone than the example embodiment shown in the first example, both when applying a phase-change material exhibiting a solid-solid phase-change or a liquid-solid phase-change.

The elongated members (11) may advantageously be made of the same metal/- material as the cooking zone (4), and may be shaped as elongated fins, circular rods etc.

Third example embodiment of the invention

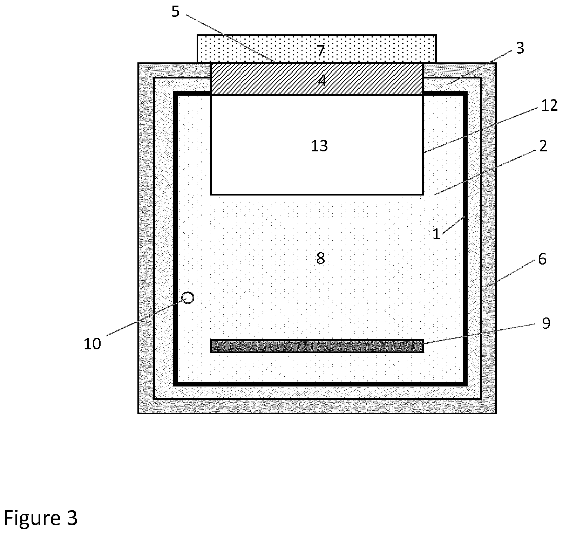

The third example embodiment of the invention, shown in figure 3, is similar to the first example embodiment except that it further comprises a second inner chamber (12) located inside the container just below and in contact with the cooking zone (4). The second inner chamber (12) is filled with a second phase-change material (13) exhibiting a liquid-solid phase-change at a lower phase-transition temperature than the first phase-change material (8) filling the rest of the first inner chamber (2).

The second inner chamber (12) may advantageously be formed by a metallic box/cylinder etc. attached and sealed to the lower surface of the cooking zone (4) such that there is no exchange/leakage of phase-change materials between the first inner chamber (2) and the second inner chamber (12).

This example embodiment has the advantage of ensuring that the phase-change material (13) in contact with the cooking zone (4) is in the liquid state until a large fraction of the material (8) has changed phase and ensures thus an efficient convective heat transfer from the phase-change materials (8, 13) to the cooking zone (4) as long as the first phase-change material (8) is still at least partly in the high-temperature phase. I.e., the user has not emptied the thermal reservoir of the first phase-change material (8) to an extent which has transformed a large fraction of the first phase-change material to its low-temperature phase. This embodiment thus gives the user a longer time available for high power usage.

Fourth example embodiment of the invention

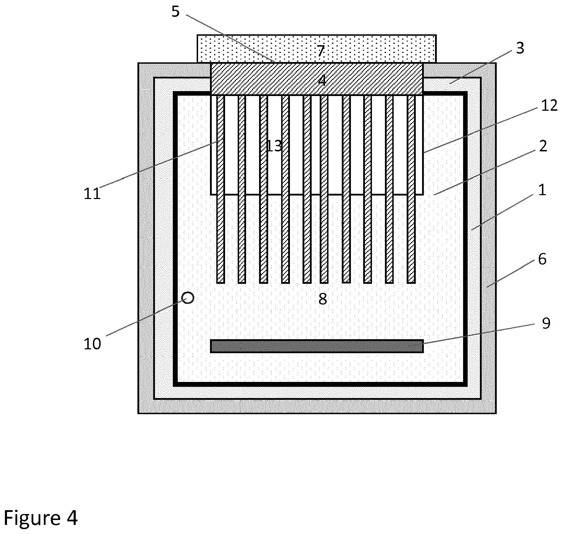

The fourth example embodiment of the invention, shown in figure 4, is similar to the third example embodiment except that it further comprises a similar plurality of one or more elongated members (11) as in example 2.

The elongated members (11) may advantageously extend through the second inner chamber (12) and further a distance into the first inner chamber (2) to enable an improved thermal contact between the phase-change material inside the first inner chamber and the phase-change material inside the second inner chamber. The members (11) may also, in another embodiment, only be installed below the second inner chamber (12).

Fifth example embodiment of the invention

The fifth example embodiment of the invention, shown in figure 5, is similar to the first example embodiment except that the upper wall (1c) is disc shaped and forms an upper closure of the cylindric container (1), the cooking zone (4) is laid onto and in thermal contact with the upper wall (1c), and it applies a heating element designed as a as a cross of two plates, and further that it comprises an expansion chamber (20) located in the inner space of the container (1) of the cooking apparatus.

The expansion chamber (20) comprises an inner cylindrically symmetric space being confined by a cylinder-shaped side wall (21), a first end wall (22) and a second end wall (23) having an opening (24). The first (22) and second (23) end walls are located at opposite ends of the cylinder-shaped side wall (21). A slide-able piston (25) is located inside and divides the inner cylindrically symmetric space into a first (26) and a second (27) inner expansion chamber. The first inner expansion chamber (26) is filled with a gas pressurised such that it constantly seeks to press the slide-able piston (25) towards the opening (24) and thus squeeze out the phase-change material being present in the second inner expansion chamber (27).

Sixth example embodiment of the invention

The sixth example embodiment of the invention is similar to the fifth example embodiment except for having the expansion chamber (20) located in the upper part of the first inner chamber (2) extending through the ring-shaped disc (1c) and at least partly into the first (3), and if present the second (6), heat insulation with the opening (24) of the expansion chamber (20) in direct contact with the phase change material (8). During expansion and contraction, the liquid phase-change material may then move up and down inside the expansion chamber (20), and a piston (25) is not required.

In this design it is required to use a phase-change material (8) which has its lowest density in liquid state, and it is advantageous then to use a small resistive heater placed inside the expansion chamber (20) and extending down to the main heating element (9) so that when heat is added to the chamber (2) and an expansion starts, the liquid phase-change material in the first container (2) is in direct contact with the liquid in the expansion chamber (20).

Seventh example embodiment of the invention

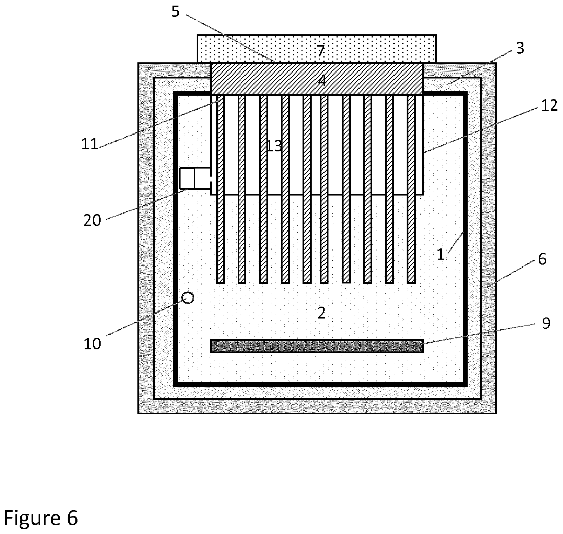

The seventh example embodiment of the invention, shown in figure 6, is similar to the fourth example embodiment except that it further comprises a similar expansion chamber (20) as described in the fifth example embodiment made in fluid communication with the second phase-change material (13) inside the second inner chamber (12).

Eighth example embodiment of the invention

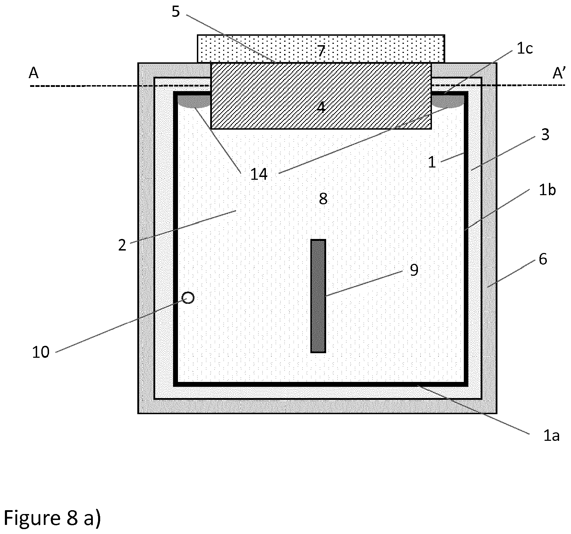

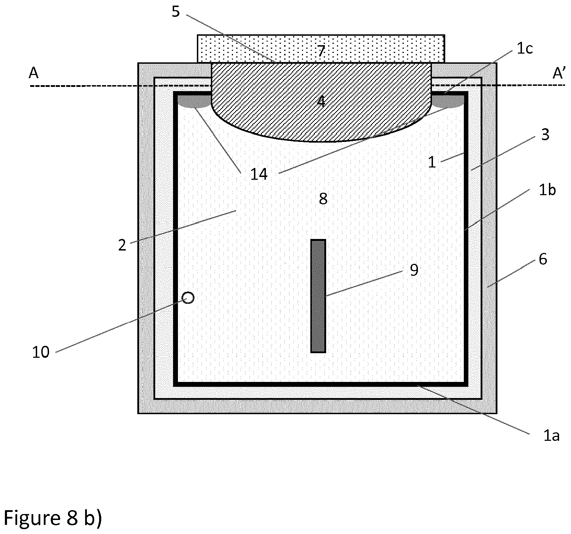

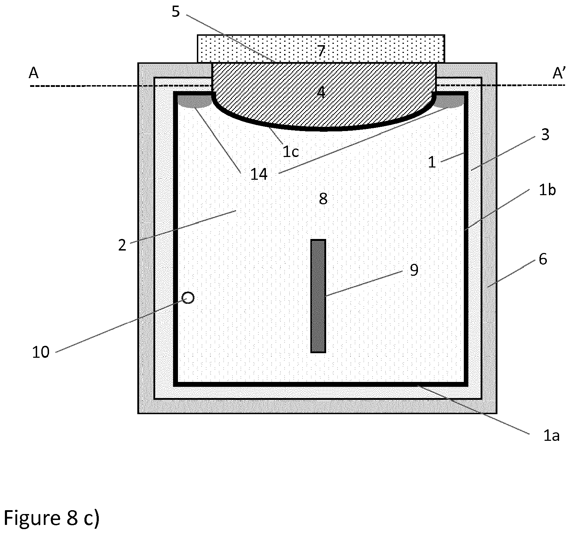

The eighth example embodiment of the invention has a cooking zone (4) having a planar upper surface (5) and a thickness such that it protrudes downwardly a distance into the into the first inner chamber (2) as shown schematically in figure 8 a).

Alternatively, the cooking zone (4) may at its lower part be given a convex shape and be rotational symmetric over an axis located in the centre of the cooking zone (4) and being normal to the lines marked A-A' and B-B' in figures 1a and 1b respectively (i.e. the axis is normal to the upper planar surface (5), as shown schematically in figure 8 b).

Due to the part of the the (4) protruding a distance into the first inner chamber (2), there will be formed a zone (14) at the upper part of the first inner chamber (2) being confined by parts of the walls 1 b) and 1 c) and the cooking zone (4). This zone (14) may be utilised as expansion chamber by being filled with a moderately pressurised gas, such as e.g. from 0.25 to 3 bars, preferably from 0.4 to 2 bars. Due to its compressibility, the gas filled zone (14) will absorb volume changes in the liquid phase change material (8). In a further alternative, as shown schematically in figure 8 c), the upper part of the container (1) is shaped similar as the bottom of champagne bottle, i.e. the upper wall (1c) forms a closure of the upper end of the container (1) but has a convex shaped bulge protruding downwardly into the first inner chamber (2). The bulge may advantageously be rotational symmetric over an axis located in the centre of the cooking zone (4) and normal to the upper planar surface (5). The lower part of the cooking zone (4) should be given a complementary shape and dimension to form a close fit with the bulge shaped part of the upper wall (1c).

A cooking zone (4) having a lower part protruding somewhat into the first inner chamber (2) and a gas filled zone (14) may be applied in all aspects of the invention and inn every example embodiment described herein.

Ninth example embodiment of the invention

The ninth example embodiment of the invention applies elongated members similar as in the second example embodiment, except that the elongated members are made of a solid-solid phase-change material having a phase transition temperature higher than the first phase-change material. The elongated members may for example be plates hanging or mounted vertically below the cooking plate so that they have large vertical surfaces in direct contact with the first phase-change material, and so that they can stimulate a convective flow of liquid in the first phase change material when they are releasing heat due to the solid-solid phase change.

Tenth example embodiment of the invention

The tenth example embodiment of the invention applies flexible materials in the walls of the first container (1) and/or second inner chamber (12), such that all or parts of the volume change in the one or more phase change material(s) is facilitated by a similar change in the volume of the first container (1) and/or the second inner chamber (12).

Eleventh example embodiment of the invention

The eleventh example embodiment of the invention further comprises a second phase-change material being encapsulated in small micro-containers/capsules which are dispersed in the first phase-change material, and where the second phase-change material in the micro-containers/capsules has a higher phase-change temperature than the surrounding first phase-change material.

A second phase-change material being encapsulated in small micro-containers/- capsules dispersed in the first phase-change material may be applied in all aspects of the invention and inn every example embodiment described herein.

Twelfth example embodiment

A twelfth example embodiment of the invention has a rectangular first container (1) made of aluminium with inner dimensions of 30x30x12 cm$^3$ being filled with pentaerythritol as the first PCM-material and a set of 50 evenly spaced aluminium fins/elongated members (11) of dimensions 0.14x10x30 cm$^3$ extending downward from the cooking zone (4) (which may also be made of aluminium) such as illustrated in e.g. figure 2. The aluminium fins will be spaced with a gap of about 4.5 mm between them.

Calculations show that such a configuration will obtain a storage capacity of around 1 kWh of heat and enable supplying the cooking zone with heat flux controllable up to around 2 kW (with a temperature difference between the cooking zone and the phase-transition temperature of the PCM-material of around 80 °C).

In the case of using 30 aluminium fins, instead of 50 and otherwise equal, the solar cooker will be able to store about 1,5 kWh of thermal energy and provide a heat flux to the cooking zone of about 1 kW even when around half of the phase-change material has changed phase. In this case the gap between the aluminium fins becomes approximately 8 mm.

The twelfth example embodiment is a particularly low-cost version of the present invention and is envisioned having either a cylindrical first container (1) having an inner diameter in the range of from 20 to 50 cm, preferably 30 cm, and a height of from 10 to 40 cm, preferably 15 cm, or alternatively a rectangular first container (1) having a length and width of from 20 to 50 cm, preferably 30 cm and a height of from 12 to 50 cm, preferably 15 cm. The inner chamber (2) is preferably filled with pentaerythritol as a first PCM-materials and contains a set of from 20 to 70, preferably of from 30 to 70, aluminium fins/elongated members (11) arranged in parallel at a distance from each other, preferably evenly spaced, and protruding downwardly from the cooking zone (4) a distance in the range of from 2 to 40 cm, preferably of 5 to 20 cm, above the bottom wall 1(a) of the first container. The thickness of the aluminium fins/elongated members (11) is in the range of from 0.5 to 3 mm, preferably of from 1.0 to 1.5 mm. The aluminium fins/elongated members (11) may in one alternative be adapted to extend over either the length or the width of inner chamber (2), or alternatively if the inner chamber is a cylinder, to extend form one side to the other over the horizontal cross-section of the cylinder. I.e. the fins will be gradually wider and wider towards the centre axis of the cylindrical inner chamber or be equally wide in the case of a rectangular inner chamber.

Verification of the invention

A solar cooker as described in the first example embodiment having a cylindrical inner container of inner radius of 10 cm and inner height of 30 cm may contain about 20 kg of solid phase NaOH mixed with 7.2 % $Na_2CO_3$ as phase-change material (density approx. 2.2 kg/litre), enabling storing around 2 kWh as latent heat in the phase-change material. This latent heat will be released from the phase-change material at a temperature of 283 °C.

In the case of using a layer of rock wool of thickness of 10 cm (thermal conductivity of 0.06 W/mK) as the first insulation layer and a layer of foamed polyurethane of thickness of 10 cm as the second insulation layer (thermal conductivity of 0.025 W/mK), the container of the solar cooker obtains and outer height of 70 cm and outer diameter of 60 cm.

The heat flux across the bottom and bottom 2 and upper 3,4 surfaces may be considered being almost equal to the heat flux across a planar composite wall in contact with free-flowing air (natural convection). Such heat flux may be calculated by the relation [ref 1], page 37-38:

$$q'' = U(T_{cont} - T_{air})$$

where q" is the heat flux in unit [W/m$^2$], U is the overall heat transfer coefficient in unit [W/m$^2$K], $T_{cont}$ is the temperature in unit [°C] inside the container (which is the phase-change temperature of the phase-change material), and $T_{air}$ is the temperature in unit [°C] of the surrounding air. The overall heat transfer coefficient for a composite wall of a number of "i" layers is given by the relation [ref 1], page 37, 38:

$$\frac{1}{U} = \frac{L_1}{k_1} + \frac{L_2}{k_2} + \cdots + \frac{L_i}{k_i} + \frac{1}{h_{air}}$$

Here $L_1$ is the thickness in unit [m] of the first insulation layer, $L_2$ is the thickness of the second insulation layer etc, and $k_1$ is the thermal conductivity in unit [W/mK] of the first insulation layer, $k_2$ is the thermal conductivity of the second insulation layer etc, and $h_{air}$ is the heat transfer coefficient towards the ambient air for natural convection.

The $h_{air}$ for a vertical standing plate is about 5 W/m²K (ref [2]). By assuming the same value for the top and bottom surface (it will be somewhat less due to the surfaces being horizontally oriented) and that the inner steel casing is 1 mm thick and has a thermal conductivity of 16 W/mK (ref [3]), the heat flux across the bottom and upper surface of the container of the solar cooker becomes 44.8 W/m², or a heat loss across each of the bottom and top surface of 1.4 W (if the lid 7 is being equally insulating as the rest of the wall).

The heat loss across a cylindrical side wall of length h having a laminar wall structure of a first layer having outer radius of $r_1$ (this layer is facing the inner space of the cylinder), a second layer of outer radius of $r_2$, etc. up to an i'th layer with outer radius of $r_{air}$, may be calculated by the relation, ref [1], page 40:

$$q = \frac{(T_{cont} - T_{air})}{R_{tot}}$$

where $R_{tot}$ is the overall thermal resistance in unit [K/W] over the cylindrical wall, and which is defined by:

$$R_{tot} = \frac{\ln(r_1/r_{cont})}{2\pi k_1 h} + \frac{\ln(r_2/r_1)}{2\pi k_2 h} + \cdots + \frac{\ln(r_i/r_{i-1})}{2\pi k_i h} + \frac{1}{h_{air} A_{air}}$$

Here $r_{cont}$ is the inner diameter of the container and $A_{air}$ is the outer surface of the cylinder facing the ambient air.

Applying the same wall structure for the cylindrical part as given for the bottom and top surfaces above, the heat loss across the cylindrical side wall becomes 18.4 W, such that the overall heat loss from this example embodiment becomes approx. 21.2 W as long as the phase-change material releases sufficient latent heat to maintain the phase-change material at 283 °C. Over a time-span of e.g. 24 hours, this example embodiment will lose at most about 0.5 kWh of heat when being stored indoors (in contact with air at free convection flow conditions). In practice, the heat loss will be somewhat smaller than calculated because due to the heat loss, phase-change material in proximity of the walls of the container will gradually solidify and thus increase the thermal resistance across the container wall.

This example embodiment, of about 20 kg of NaOH mixed with 7.2 % $Na_2CO_3$ as phase-change material, may store around 2 kWh as latent heat, such that after 24 hours of storage, about ¾ of the cooker's available latent heat content remains for cooking food.

Similarly, a cylindrical container of inner diameter 15 cm and inner height of 30 cm being filled with pentaerythritol (IUPAC-name; 2,2-bis(hydroxymethyl)propane-1,3-diol) as the phase-change material may store about 1.8 kWh as latent heat (density 1,4 kg/litre, phase-change temperature 184.2 °C and heat of fusion 222.5 kJ/kg). The heat loss over 24 hours storage becomes just above 0.4 kWh, i.e. about ¼ of its total the latent heat content.

These calculations verify that the solar cooker according to the invention may store and hold sufficient amounts of heat at a temperature enabling cooking food for at least 24 hours. A solar panel of 300 - 500 W peak power is sufficient for accumulating around 2 kWh of heat energy over a single day of sunshine in subtropical and tropical areas.

It should be remarked that the main usage mode in combination with a PV module will be that the energy is added in day time and a large fraction of it is used in the same afternoon 3 hours later. The residual liquid in the phase change material will during the night start solidifying along the coldest walls and thereby gradually add insulation so that in many cases it is likely that 80-90 % of the energy added in day time will be available for cooking use for dinner and breakfast/lunch.

The example embodiments above display the cooking apparatus according to the invention as a vertical cylinder having a single cooking zone. This should not be interpreted as a limitation of the invention. The container may alternatively be shaped as a box, i.e. a rectangular parallelepiped of length A, width B, and height C, or any other conceivable design, and the cooking apparatus may be provided with two or more cooking zones.

**References**

1 Adrian Bejan, "Heat Transfer", John Wiley & Sons, 1993.

2 Retrieved from the Internet: https://www.engineersedge.com/heat_transfer/convective_heat_transfer_c oefficients__13378.htm

3 Retrieved from the Internet: https://www.engineeringtoolbox.com/thermal-conductivity-d_429.html

4 Pamwar et al., "State of the art of solar cooking: An overview", Renewable and Sustainable Energy Reviews 16 (2012) 3776- 3785, doi: 10.10 16/j.rser.2012.03.026

5 Lameck NKhonera et al., "Experimental investigation of a finned pentaerythritol-based heat storage unit for solar cooking at 150-200 °C", Energy Procedia, 93 (2016) 160-167, doi:10.1016/j.egypro.2017.07.165

**Claims**

1.  A cooking apparatus comprising:

    - a first liquid tight container (1) having a bottom wall (1a), side wall (1b), and an upper wall (1c) enclosing a first inner chamber (2) of the container, where:

        - the upper wall (1c) comprises at least one substantially horizontally oriented cooking zone (4) made of a thermally conductive material, and
        - the bottom wall (1a), the side wall (1b), and the upper wall (1c) except for the at least one cooking zone (4) comprises a first thermal insulation (3), and

    - a first phase-change material (8) located inside and substantially filling the first inner chamber (2) of the first container (1),
    - one or more electric resistance heating element(s) (9) electrically connected to a source of electric energy and being in thermal contact with the phase-change material(s),

    **characterised in that**:

    - the cooking zone (4) is integrated with and forming a part of the upper wall (1c) and is in direct thermal contact with the first phase-change material (8), or is arranged onto the upper wall (1c), and **in that** the cooking apparatus further comprises:
    - a releasable lid (7) made of a thermally insulating material adapted to cover and thermally insulate each of the at least one cooking zone (4).

2.  A cooking apparatus comprising:

    - a first liquid tight container (1) having a bottom wall (1a), side wall (1b), and an upper wall (1c) enclosing a first inner chamber (2) of the container, where:

        - the upper wall (1c) comprises at least one substantially horizontally oriented cooking zone (4) made of a thermally conductive material, and
        - the bottom wall (1a), the side wall (1b), and the upper wall (1c) except for the at least one cooking zone (4) comprises a first thermal insulation (3), and

    - a first phase-change material (8) located inside and substantially filling the first inner chamber (2) of the first container (1),
    - one or more electric resistance heating element(s) (9) electrically connected to a source of electric energy and being in thermal contact with the phase-change material(s),

    **characterised in that** the cooking apparatus further comprises:

    - a second inner chamber (12) located inside the first container just below and in contact with the cooking zone (4) or the upper wall (1c), and which is filled with a second phase-change material (13) which exhibits a liquid-solid phase-change and has a lower phase-transition temperature than the first phase-change material (8), and
- a releasable lid (7) made of a thermally insulating material adapted to cover and thermally insulate each of the at least one cooking zone (4).

3. Cooking apparatus according to claim 1 or 2, wherein the first phase-change material (8) is a chemical compound or mixture of chemical compounds going through a reversible phase-change enabling absorbing or releasing latent heat, preferably more than 100 kJ/kg phase-change material, at a temperature in the range from 80 to 500 °C, preferably from 90 to 450 °C, more preferably from 100 to 400 °C, and most preferably from 110 to 300 °C.

4. Cooking apparatus according to any preceding claim, wherein the first phase-change material (8) is:

- either a chemical compound or a mixture of chemical compounds chosen from the group consisting of; $LiNO_3$, $NaNO_3$, $NaNO_2$, $MgCl_2$-$6H_2O$, $NaOH$, $KOH$, $KNO_3$, or
- a mixture of either;

26.8 % by weight $NaCl$ and $NaOH$,
7.2 % by weight $Na_2CO_3$ and $NaOH$,
5 % by weight $NaNO_3$ and $NaOH$,
49 % by weight $LiNO_3$ and $NaNO_3$, or
31.9 % by weight $ZnCl$ and $KCl$.

5. Cooking apparatus according to claim 1 or 2, wherein the first phase-change material (8) is:

- either a chemical compound or a mixture of chemical compounds chosen from the group consisting of; erythritol, acetanilide, pentaerythritol, pentaglycerine, d-mannitol, or dulcitol/galactitol,
- or a mixture in molar % of pentaerythritol (PE), trimethylol ethane (TME) and neopentyl glycol (NPG) of: 30 PE, 10 TME, and 60 NPG; 45 PE, 45 TME, and 10 NPG; 45 PE, 10 TME, and 45 NPG; or 70 PE, 15 TME, and 15 NPG.

6. Cooking apparatus according to any preceding claim, wherein the cooking zone (4) has an upper planar surface (5) and is made of:

- a metallic material chosen from the group of: Fe, Cu, Al, Zn, Sn, W, or
- an alloy chosen from the group of: bronze, brass, constantan, steel, pinchbeck, or
- a ceramics chosen from the group of: aluminium oxide, crystalline silicon dioxide, porcelain, or pyrex glass.

7. Cooking apparatus according to any preceding claim, wherein:

- the bottom wall (1a), the side wall (1b), and the upper wall (1c) of the first container (1) are made up of a single layer of a material chosen from the group consisting of; glass, polymer, steel or aluminium, and
- the bottom wall (1a), the side wall (1b), and the upper wall (1c) of the first container (1) has a thermal insulation layer (3) of thickness of from 5 to 30 cm on their outer side facing the surroundings of the apparatus, and where the thermal insulation layer (3) is made of one or more heat insulating materials chosen from the group consisting of: calcium silicate, cellular glass, fiberglass, mineral wool, rock wool, ceramic foam, polyurethane, and foamed polyurethane, or other porous materials having air filled pores.

8. Cooking apparatus according to any of claims 1 - 6, wherein

- the thermal insulation of the first container (1) is obtained by having the bottom wall (1a), the side wall (1b), and the upper wall (1c) of the first container (1) formed by at least two concentric similarly shaped containers where the inner container is the first container (1) and the one or more outer container(s) is/are larger dimensioned such that there is a gap between the inner and the second, and eventually the second and the third concentric containers etc.,
- the least two concentric similarly shaped containers are made of the same or of different materials chosen from the group consisting of; glass, polymer, or a metal such as steel or aluminium, and
- the gap between two adjacent second concentric similarly shaped containers are filled with a material of either:

- heat insulating material chosen from the group consisting of: calcium silicate, cellular glass, fiberglass,

14

mineral wool, rock wool, ceramic foam, polyurethane, and foamed polyurethane, or
- a gas evacuated to a gas pressure of less than 25 kPa, preferably less than 1 kPa.

9. Cooking apparatus according to any preceding claim, wherein the apparatus comprises two or more thermal insulation layers (6) encapsulating the first container (1) except at the area defining the one or more cooking zone(s) (4).

10. Cooking apparatus according to any preceding claim, wherein the source of electric energy is one of, or a combination of, a photovoltaic panel, wind-mill, and grid electricity.

11. Cooking apparatus according to any preceding claim, wherein

- the apparatus further comprises one or more elongated members (11) extending downwardly from the cooking zone (4) a distance into the first inner chamber (2), and where
- the elongated members (11) is either made of the same material as the cooking zone (4), or of a solid-solid phase-change material having a phase transition temperature higher than the first phase-change material.

12. Cooking apparatus according to any of claims 1 - 10, wherein the apparatus further comprises one or more elongated members (11) extending downwardly from the upper wall (1c) a distance into the first inner chamber (2), and where the elongated members (11) are hollow and filled with a second phase-change material.

13. Cooking apparatus according to any preceding claim, wherein the cooking zone (4) has a planar upper surface and a thickness such that it protrudes downwardly a distance into the into the first inner chamber (2), and where the first inner chamber (2) has a zone (14) filled with a gas having a pressure varying in the range of from 0.25 to 3 bars, more preferably from 0.4 to 2 bars, and the zone (14) is confined by wall 1 b), wall 1 c), and an outer surface of the cooking zone (4) at the upper part of the first inner chamber (2).

14. Cooking apparatus according to any preceding claim, wherein the first container (1) and/or second inner chamber (12) is made of a flexible material so that all or parts of the volume change in the one or more phase change material(s) is facilitated by a similar change in the volume of the first container (1) and/or the second inner chamber (12),

15. Cooking apparatus according to any preceding claim, further comprising a second phase-change material encapsulated in small micro-containers/capsules dispersed in the first phase-change material, and where the second phase-change material in the micro-containers/capsules has a higher phase-change temperature than the surrounding first phase-change material.

16. Cooking apparatus according to claim 11, wherein:

- the first container (1) is filled with pentaerythritol as the first PCM-material and made of aluminium, and where the first contained is shaped either as:

i) a rectangular parallelepiped with an inner length in the range of from 20 to 50 cm, preferably of 30 cm, an inner width in the range of from 20 to 50 cm, preferably of 30 cm, and an inner height in the range of from 12 to 50 cm, preferably of 15 cm, or
ii) a cylinder of inner diameter in the range of from 20 to 50 cm, preferably of 30 cm, and an inner height in the range of from 10 to 40 cm, preferably of 15 cm,

and where the cooking apparatus comprises in the range of from 20 to 70, preferably of from 30 to 70 elongated members (11) made of aluminium, and where:
- the elongated members (11) are adapted to fit inside the inner chamber (2) when protruding downwardly from the cooking zone (4) and arranged in parallel and spaced a distance from each other, preferably evenly spaced from each other,
- the elongated members (11) has a thickness in the range of from 0.5 to 3 mm, preferably of from 1.0 to 1.5 mm, and
- the elongated members (11) extend downwardly into the inner chamber (2) to a distance in the range of from 2 to 40, preferably 5 to 20 cm above the bottom wall (1a).

17. Cooking apparatus according to any preceding claim, wherein the cooking zone (4) further comprises a lifting mechanism adapted to, in a first position, be fully embedded and retracted into the cooking zone (4) and further adapted to, in at least a second position, extend a distance above the upper surface of the cooking zone (4).

**Patentansprüche**

1. Kochgerät, umfassend:

- einen ersten flüssigkeitsdichten Behälter (1), der eine Bodenwand (1a), eine Seitenwand (1b) und eine obere Wand (1c) aufweist, die eine erste innere Kammer (2) des Behälters umschließen, wobei:

- die obere Wand (1c) mindestens eine im Wesentlichen horizontal ausgerichtete Kochzone (4) umfasst, die aus einem wärmeleitenden Material hergestellt wird und
- die Bodenwand (1a), die Seitenwand (1b) und die obere Wand (1c), mit Ausnahme der mindestens einen Kochzone (4), eine erste Wärmeisolierung (3) umfassen und

- ein erstes Phasenwechselmaterial (8), das sich in der ersten inneren Kammer (2) des ersten Behälters (1) befindet und diese im Wesentlichen ausfüllt,
- ein oder mehrere elektrische Widerstandsheizelement(e) (9), die elektrisch mit einer elektrischen Energiequelle verbunden sind und mit dem bzw. den Phasenwechselmaterial(ien) in Wärmekontakt stehen,

**dadurch gekennzeichnet, dass**:

- die Kochzone (4) mit der oberen Wand (1c) integriert ist und einen Teil davon bildet und mit dem ersten Phasenwechselmaterial (8) in direktem Wärmekontakt steht oder auf der oberen Wand (1c) angeordnet ist, und dadurch, dass das Kochgerät ferner Folgendes umfasst:
- einen lösbaren Deckel (7), der aus einem wärmeisolierenden Material hergestellt wird, das angepasst ist, um jede der mindestens einen Kochzone (4) abzudecken und diese im Hinblick auf Wärme zu isolieren.

2. Kochgerät, umfassend:

- einen ersten flüssigkeitsdichten Behälter (1), der eine Bodenwand (1a), eine Seitenwand (1b) und eine obere Wand (1c) aufweist, die eine erste innere Kammer (2) des Behälters umschließen, wobei:

- die obere Wand (1c) mindestens eine im Wesentlichen horizontal ausgerichtete Kochzone (4) umfasst, die aus einem wärmeleitenden Material hergestellt wird und
- die Bodenwand (1a), die Seitenwand (1b) und die obere Wand (1c), mit Ausnahme der mindestens einen Kochzone (4), eine erste Wärmeisolierung (3) umfassen und

- ein erstes Phasenwechselmaterial (8), das sich in der ersten inneren Kammer (2) des ersten Behälters (1) befindet und diese im Wesentlichen ausfüllt,
- ein oder mehrere elektrische Widerstandsheizelement(e) (9), die elektrisch mit einer elektrischen Energiequelle verbunden sind und mit dem bzw. den Phasenwechselmaterial(ien) in Wärmekontakt stehen,

**dadurch gekennzeichnet, dass** das Kochgerät ferner Folgendes umfasst:

- eine zweite innere Kammer (12), die sich in dem ersten Behälter direkt unter der Kochzone (4) oder der oberen Wand (1c) befindet und damit in Kontakt steht, und die mit einem zweiten Phasenwechselmaterial (13) gefüllt ist, das einen Phasenwechsel von flüssig zu fest aufweist und eine niedrigere Phasenübergangstemperatur aufweist als das erste Phasenwechselmaterial (8) und
- einen lösbaren Deckel (7), der aus einem wärmeisolierenden Material hergestellt wird, das angepasst ist, um jede der mindestens einen Kochzone (4) abzudecken und diese im Hinblick auf Wärme zu isolieren.

3. Kochgerät nach Anspruch 1 oder 2, wobei das erste Phasenwechselmaterial (8) einer chemischen Verbindung oder einem Gemisch von chemischen Verbindungen entspricht, die bzw. das einen reversiblen Phasenwechsel durchläuft, der das Absorbieren oder Freisetzen von latenter Wärme ermöglicht, vorzugsweise mehr als 100 kJ/kg Phasenwechselmaterial, bei einer Temperatur in dem Bereich von 80 bis 500 °C, vorzugsweise von 90 bis 450 °C, vorzugsweiser von 100 bis 400 °C und am meisten bevorzugt von 110 bis 300 °C.

4. Kochgerät nach einem der vorhergehenden Ansprüche, wobei das erste Phasenwechselmaterial (8) Folgendes ist:

- entweder eine chemische Verbindung oder ein Gemisch von chemischen Verbindungen, ausgewählt aus der Gruppe, die aus Folgendem besteht: $LiNO_3$, $NaNO_3$, $NaNO_2$, $MgCl_2 \cdot 6H_2O$, NaOH, KOH, $KNO_3$ oder
- ein Gemisch von entweder:

26,8 Gew.-% NaCl und NaOH,
7,2 Gew.-% $Na_2CO_3$ und NaOH,
5 Gew.-% $NaNO_3$ und NaOH,
49 Gew.-% $LiNO_3$ und $NaNO_3$ oder
31,9 Gew.-% ZnCl und KCl.

5. Kochgerät nach Anspruch 1 oder 2, wobei das erste Phasenwechselmaterial (8) Folgendes ist:

- entweder eine chemische Verbindung oder ein Gemisch von chemischen Verbindungen, ausgewählt aus der Gruppe, die aus Folgendem besteht: Erythrit, Acetanilid, Pentaerythrit, Pentaglycerin, D-Mannit oder Dulcit/Galaktit,
- oder ein Gemisch in Mol-% von Pentaerythrit (PE), Trimethylolethan (TME) und Neopentylglykol (NPG) von: 30 PE, 10 TME und 60 NPG; 45 PE, 45 TME und 10 NPG; 45 PE, 10 TME und 45 NPG; oder 70 PE, 15 TME und 15 NPG.

6. Kochgerät nach einem der vorhergehenden Ansprüche, wobei die Kochzone (4) eine obere ebene Fläche (5) aufweist und aus Folgendem hergestellt wird:

- einem metallischen Material, das aus der folgenden Gruppe ausgewählt ist: Fe, Cu, Al, Zn, Sn, W oder
- einer Legierung, die aus der folgenden Gruppe ausgewählt ist: Bronze, Messing, Konstantan, Stahl, Pinchbeck oder
- einer Keramik, die aus der folgenden Gruppe ausgewählt ist: Aluminiumoxid, kristallinem Siliciumdioxid, Porzellan oder Pyrexglas.

7. Kochgerät nach einem der vorhergehenden Ansprüche, wobei:

- die Bodenwand (1a), die Seitenwand (1b) und die obere Wand (1c) des ersten Behälters (1) aus einer einzigen Schicht von einem Material gebildet werden, das aus der Gruppe ausgewählt ist, die aus Folgendem besteht: Glas, Polymer, Stahl oder Aluminium und
- die Bodenwand (1a), die Seitenwand (1b) und die obere Wand (1c) des ersten Behälters (1) an ihrer Außenseite, die der Umgebung des Geräts zugewandt ist, eine Wärmeisolierschicht (3) mit einer Dicke von 5 bis 30 cm aufweisen, und wobei die Wärmeisolierschicht (3) aus einem oder mehreren wärmeisolierenden Materialien hergestellt wird, die aus der Gruppe ausgewählt sind, die aus Folgendem besteht: Calciumsilikat, Schaumglas, Fiberglas, Mineralwolle, Steinwolle, Keramikschaum, Polyurethan und geschäumtem Polyurethan oder anderen porösen Materialien, die luftgefüllte Poren aufweisen.

8. Kochgerät nach einem der Ansprüche 1-6, wobei

- die Wärmeisolierung des ersten Behälters (1) erhalten wird, indem die Bodenwand (1a), die Seitenwand (1b) und die obere Wand (1c) des ersten Behälters (1) durch mindestens zwei konzentrisch ähnlich geformte Behälter gebildet werden, wobei der innere Behälter der erste Behälter (1) ist und der eine oder die mehreren äußere(n) Behälter größer bemessen ist bzw. sind, sodass ein Spalt zwischen dem inneren und dem zweiten, und schließlich dem zweiten und dem dritten konzentrischen Behälter usw. vorliegt,
- die mindestens zwei konzentrisch ähnlich geformten Behälter aus dem gleichen oder aus unterschiedlichen Materialien hergestellt werden, die aus der Gruppe ausgewählt sind, die aus Folgendem besteht: Glas, Polymer oder einem Metall, wie etwa Stahl oder Aluminium und
- der Spalt zwischen zwei benachbarten zweiten konzentrisch ähnlich geformten Behältern mit einem der folgenden Materialien gefüllt wird:

- einem wärmeisolierenden Material, das aus der Gruppe ausgewählt ist, die aus Folgendem besteht: Calciumsilikat, Schaumglas, Fiberglas, Mineralwolle, Steinwolle, Keramikschaum, Polyurethan und geschäumtem Polyurethan oder

- einem Gas, das zu einem Gasdruck von weniger als 25 kPa, vorzugsweise weniger als 1 kPa entleert wird.

9. Kochgerät nach einem der vorhergehenden Ansprüche, wobei das Gerät zwei oder mehr Wärmeisolierschichten (6) umfasst, die den ersten Behälter (1) außer in dem Bereich einkapseln, der die eine oder mehreren Kochzone(n) (4) definiert.

10. Kochgerät nach einem der vorhergehenden Ansprüche, wobei die elektrische Energiequelle einem von oder einer Kombination von einer Photovoltaikanlage, einem Windrad und Netzstrom entspricht.

11. Kochgerät nach einem der vorhergehenden Ansprüche, wobei

- das Gerät ferner ein oder mehrere längliche Elemente (11) umfasst, die sich von der Kochzone (4) in einem Abstand in die erste innere Kammer (2) nach unten erstrecken und wobei
- die länglichen Elemente (11) entweder aus dem gleichen Material hergestellt werden wie die Kochzone (4) oder aus einem Fest-Fest-Phasenwechselmaterial, das eine Phasenübergangstemperatur aufweist, die höher als beim ersten Phasenwechselmaterial ist.

12. Kochgerät nach einem der Ansprüche 1-10, wobei das Gerät ferner ein oder mehrere längliche Elemente (11) umfasst, die sich von der oberen Wand (1c) in einem Abstand in die erste innere Kammer (2) nach unten erstrecken und wobei die länglichen Elemente (11) hohl und mit einem zweiten Phasenwechselmaterial gefüllt sind.

13. Kochgerät nach einem der vorhergehenden Ansprüche, wobei die Kochzone (4) eine ebene obere Fläche und eine Dicke aufweist, sodass sie in einem Abstand in die erste innere Kammer (2) nach unten ragt und wobei die erste innere Kammer (2) eine Zone (14) aufweist, die mit einem Gas gefüllt ist, das einen Druck aufweist, der in dem Bereich von 0,25 bis 3 bar, vorzugsweiser von 0,4 bis 2 bar, schwankt, und die Zone (14) durch eine Wand 1 b), eine Wand 1 c) und eine Außenfläche der Kochzone (4) in dem oberen Teil der ersten inneren Kammer (2) begrenzt ist.

14. Kochgerät nach einem der vorhergehenden Ansprüche, wobei der erste Behälter (1) und/oder die zweite innere Kammer (12) aus einem flexiblen Material hergestellt wird bzw. werden, sodass die Volumenänderung in dem einen oder den mehreren Phasenwechselmaterial(ein) vollständig oder teilweise durch eine ähnliche Änderung des Volumens des ersten Behälters (1) und/oder der zweiten inneren Kammer (12) erleichtert wird.

15. Kochgerät nach einem der vorhergehenden Ansprüche, ferner umfassend ein zweites Phasenwechselmaterial, das in kleinen Mikrobehältern/Kapseln eingekapselt ist, die in dem ersten Phasenwechselmaterial dispergiert sind und wobei das zweite Phasenwechselmaterial in den Mikrobehältern/Kapseln eine höhere Phasenwechseltemperatur aufweist als das umgebende erste Phasenwechselmaterial.

16. Kochgerät nach Anspruch 11, wobei:

der erste Behälter (1) mit Pentaerythrit als das erste PCM-Material gefüllt ist und aus Aluminium hergestellt wird und wobei der erste Behälter entweder als Folgendes geformt ist:

i) ein rechteckiges Parallelepiped mit einer Innenlänge in dem Bereich von 20 bis 50 cm, vorzugsweise 30 cm, einer Innenbreite in dem Bereich von 20 bis 50 cm, vorzugsweise 30 cm, und einer Innenhöhe in dem Bereich von 12 bis 50 cm, vorzugsweise 15 cm, oder
ii) ein Zylinder mit einem Innendurchmesser in dem Bereich von 20 bis 50 cm, vorzugsweise 30 cm und einer Innenhöhe in dem Bereich 10 bis 40 cm, vorzugsweise 15 cm,

und wobei das Kochgerät in dem Bereich von 20 bis 70, vorzugsweise von 30 bis 70, längliche Elemente (11) umfasst, die aus Aluminium hergestellt werden und wobei:

- die länglichen Elemente (11) angepasst sind, um in die innere Kammer (2) zu passen, wenn sie von der Kochzone (4) nach unten ragen und parallel angeordnet und in einem Abstand voneinander beabstandet, vorzugsweise gleichmäßig voneinander beabstandet, sind,
- die länglichen Elemente (11) eine Dicke in dem Bereich von 0,5 bis 3 mm, vorzugsweise von 1,0 bis 1,5 mm, aufweisen und
- sich die länglichen Elemente (11) nach unten in die innere Kammer (2) in einem Abstand in dem Bereich von 2 bis 40, vorzugsweise 5 bis 20 cm, über der Bodenwand (1a) erstrecken.

**17.** Kochgerät nach einem der vorhergehenden Ansprüche, wobei die Kochzone (4) ferner einen Hebemechanismus umfasst, der angepasst ist, um in einer ersten Position vollständig in die Kochzone (4) eingebettet und eingezogen zu sein und ferner angepasst ist, um sich in mindestens einer zweiten Position in einem Abstand über der oberen Fläche der Kochzone (4) zu erstrecken.

## Revendications

**1.** Appareil de cuisson comprenant :

- un premier récipient (1) étanche aux liquides présentant une paroi inférieure (1a), une paroi latérale (1b) et une paroi supérieure (1c) entourant une première chambre intérieure (2) du récipient, où :
- la paroi supérieure (1c) comprend au moins une zone de cuisson (4) orientée de manière sensiblement horizontale composée d'un matériau thermoconducteur, et
- la paroi inférieure (1a), la paroi latérale (1b) et la paroi supérieure (1c), sauf l'au moins une zone de cuisson (4), comprennent une première isolation thermique (3), et
- un premier matériau à changement de phase (8) situé à l'intérieur de, et remplissant sensiblement, la première chambre intérieure (2) du premier récipient (1),
- un ou plusieurs éléments chauffants à résistance électrique (9) connectés électriquement à une source d'énergie électrique et étant en contact thermique avec le ou les matériaux à changement de phase,

**caractérisé en ce que** :

- la zone de cuisson (4) est intégrée à, et forme une partie de, la paroi supérieure (1c) et est en contact thermique direct avec le premier matériau à changement de phase (8), ou est agencée sur la paroi supérieure (1c), et **en ce que** l'appareil de cuisson comprend en outre :

- un couvercle amovible (7) composé d'un matériau thermiquement isolant adapté pour couvrir et isoler thermiquement chacune de l'au moins une zone de cuisson (4).

**2.** Appareil de cuisson comprenant :

- un premier récipient (1) étanche aux liquides présentant une paroi inférieure (1a), une paroi latérale (1b) et une paroi supérieure (1c) entourant une première chambre intérieure (2) du récipient, où :
- la paroi supérieure (1c) comprend au moins une zone de cuisson (4) orientée de manière sensiblement horizontale composée d'un matériau thermoconducteur, et
- la paroi inférieure (1a), la paroi latérale (1b) et la paroi supérieure (1c), sauf l'au moins une zone de cuisson (4), comprennent une première isolation thermique (3), et
- un premier matériau à changement de phase (8) situé à l'intérieur de, et remplissant sensiblement, la première chambre intérieure (2) du premier récipient (1),
- un ou plusieurs éléments chauffants à résistance électrique (9) connectés électriquement à une source d'énergie électrique et étant en contact thermique avec le ou les matériaux à changement de phase,

**caractérisé en ce que** l'appareil de cuisson comprend en outre :

- une seconde chambre intérieure (12) située à l'intérieur du premier récipient juste sous, et en contact avec, la zone de cuisson (4) ou la paroi supérieure (1c), et qui est remplie d'un second matériau à changement de phase (13) qui présente un changement de phase liquide-solide et a une température de transition de phase plus basse que le premier matériau à changement de phase (8), et
- un couvercle amovible (7) composé d'un matériau thermiquement isolant adapté pour couvrir et isoler thermiquement chacune de l'au moins une zone de cuisson (4).

**3.** Appareil de cuisson selon la revendication 1 ou 2, dans lequel le premier matériau à changement de phase (8) est un composé chimique ou un mélange de composés chimiques subissant un changement de phase réversible permettant l'absorption ou la libération de chaleur latente, de préférence plus de 100 kJ/kg de matériau à changement de phase, à une température dans la plage de 80 à 500 °C, de préférence de 90 à 450 °C, plus préférablement de 100 à 400 °C, et idéalement de 110 à 300 °C.

4. Appareil de cuisson selon une quelconque revendication précédente, dans lequel le premier matériau à changement de phase (8) est :

- soit un composé chimique soit un mélange de composés chimiques choisis dans le groupe constitué de : $LiNO_3$, $NaNO_3$, $NaNO_2$, $MgCl_2 \cdot 6H_2O$, $NaOH$, $KOH$, $KNO_3$, ou
- un mélange de soit :

26,8 % en poids de NaCl et de NaOH,
7,2 % en poids de $Na_2CO_3$ et de NaOH,
5 % en poids de $NaNO_3$ et de NaOH,
49 % en poids de $LiNO_3$ et de $NaNO_3$, ou
31,9 % en poids de ZnCl et de KCl.

5. Appareil de cuisson selon la revendication 1 ou 2, dans lequel le premier matériau à changement de phase (8) est :

- soit un composé chimique soit un mélange de composés chimiques choisis dans le groupe constitué de : érythritol, acétanilide, pentaérythritol, pentaglycérine, d-mannitol, ou dulcitol/galactitol,
- ou un mélange en % molaire de pentaérythritol (PE), de triméthylol éthane (TME) et de néopentylglycol (NPG) de : 30 PE, 10 TME et 60 NPG ; 45 PE, 45 TME et 10 NPG ; 45 PE, 10 TME et 45 NPG ; ou 70 PE, 15 TME et 15 NPG.

6. Appareil de cuisson selon une quelconque revendication précédente, dans lequel la zone de cuisson (4) comporte une surface plane supérieure (5) et est composée de :

- un matériau métallique choisi dans le groupe de : Fe, Cu, Al, Zn, Sn, W, ou
- un alliage choisi dans le groupe de : bronze, laiton, constantan, acier, pinchbeck, ou
- une céramique choisie dans le groupe de : oxyde d'aluminium, dioxyde de silicium cristallin, porcelaine, ou verre pyrex.

7. Appareil de cuisson selon une quelconque revendication précédente, dans lequel :

- la paroi inférieure (1a), la paroi latérale (1b) et la paroi supérieure (1c) du premier récipient (1) sont composées d'une seule couche d'un matériau choisi dans le groupe constitué de : verre, polymère, acier ou aluminium, et
- la paroi inférieure (1a), la paroi latérale (1b) et la paroi supérieure (1c) du premier récipient (1) comportent une couche d'isolation thermique (3) d'épaisseur de 5 à 30 cm sur leur côté extérieur faisant face aux environs de l'appareil, et où la couche d'isolation thermique (3) est composée d'un ou de plusieurs matériaux d'isolation thermique choisis dans le groupe constitué de : silicate de calcium, verre cellulaire, fibre de verre, laine minérale, laine de roche, mousse céramique, polyuréthane et polyuréthane expansé, ou autres matériaux poreux présentant des pores remplis d'air.

8. Appareil de cuisson selon l'une quelconque des revendications 1 à 6, dans lequel

- l'isolation thermique du premier récipient (1) est obtenue en ayant la paroi inférieure (1a), la paroi latérale (1b) et la paroi supérieure (1c) du premier récipient (1) formées par au moins deux récipients concentriques de forme similaire où le récipient intérieur est le premier récipient (1) et le ou les récipients extérieurs sont de dimensions plus grandes de telle sorte qu'il y a un espace entre le récipient intérieur et le deuxième récipient, et éventuellement les deuxième et troisième récipients concentriques, etc.,
- les au moins deux récipients concentriques de forme similaire sont composés des mêmes matériaux ou de matériaux différents choisis dans le groupe constitué de : verre, polymère ou un métal tel que l'acier ou l'aluminium, et
- l'espace entre deux récipients concentriques de forme similaire adjacents est rempli d'un matériau de soit :
- un matériau d'isolation thermique choisi dans le groupe constitué de : silicate de calcium, verre cellulaire, fibre de verre, laine minérale, laine de roche, mousse céramique, polyuréthane et polyuréthane expansé, ou
- un gaz évacué à une pression de gaz de moins de 25 kPa, de préférence moins de 1 kPa.

9. Appareil de cuisson selon une quelconque revendication précédente, dans lequel l'appareil comprend deux couches d'isolation thermiques (6) ou plus encapsulant le premier récipient (1) sauf au niveau de la zone définissant la ou les zones de cuisson (4).

10. Appareil de cuisson selon une quelconque revendication précédente, dans lequel la source d'énergie électrique est l'une parmi, ou une combinaison de, un panneau photovoltaïque, une éolienne et l'électricité de réseau.

11. Appareil de cuisson selon une quelconque revendication précédente, dans lequel

- l'appareil comprend en outre un ou plusieurs éléments allongés (11) s'étendant vers le bas depuis la zone de cuisson (4) sur une distance dans la première chambre intérieure (2), et où
- les éléments allongés (11) sont composés du même matériau que la zone de cuisson (4), ou d'un matériau à changement de phase solide-solide présentant une température de transition de phase supérieure au premier matériau à changement de phase.

12. Appareil de cuisson selon l'une quelconque des revendications 1 à 10, dans lequel l'appareil comprend en outre un ou plusieurs éléments allongés (11) s'étendant vers le bas depuis la paroi supérieure (1c) sur une distance dans la première chambre intérieure (2), et où les éléments allongés (11) sont creux et remplis d'un second matériau à changement de phase.

13. Appareil de cuisson selon une quelconque revendication précédente, dans lequel la zone de cuisson (4) présente une surface supérieure plane et une épaisseur de telle sorte qu'elle fait saillie vers le bas sur une distance dans la première chambre intérieure (2), et où la première chambre intérieure (2) comporte une zone (14) remplie d'un gaz présentant une pression variant dans la plage de 0,25 à 3 bars, plus préférablement de 0,4 à 2 bars, et la zone (14) est confinée par la paroi (1b), la paroi (1c) et une surface extérieure de la zone de cuisson (4) au niveau de la partie supérieure de la première chambre intérieure (2).

14. Appareil de cuisson selon une quelconque revendication précédente, dans lequel le premier récipient (1) et/ou la seconde chambre intérieure (12) sont composés d'un matériau flexible de telle sorte que la totalité ou des parties du changement de volume dans le ou les matériaux à changement de phase sont facilitées par un changement similaire du volume du premier récipient (1) et/ou de la seconde chambre intérieure (12).

15. Appareil de cuisson selon une quelconque revendication précédente, comprenant en outre un second matériau à changement de phase encapsulé dans de petits micro-récipients/capsules dispersés dans le premier matériau à changement de phase, et où le second matériau à changement de phase dans les micro-récipients/capsules présente une température de changement de phase plus élevée que le premier matériau à changement de phase environnant.

16. Appareil de cuisson selon la revendication 11, dans lequel :

- le premier récipient (1) est rempli de pentaérythritol en tant que premier matériau PCM et composé d'aluminium, et où le premier récipient est façonné soit comme :

i) un parallélépipède rectangle ayant une longueur intérieure dans la plage de 20 à 50 cm, de préférence de 30 cm, une largeur intérieure dans la plage de 20 à 50 cm, de préférence de 30 cm, et une hauteur intérieure dans la plage de 12 à 50 cm, de préférence de 15 cm, ou
ii) un cylindre de diamètre intérieur dans la plage de 20 à 50 cm, de préférence de 30 cm, et une hauteur intérieure dans la plage de 10 à 40 cm, de préférence de 15 cm,

et où l'appareil de cuisson comprend dans la plage de 20 à 70, de préférence de 30 à 70, éléments allongés (11) composés d'aluminium, et où :

- les éléments allongés (11) sont adaptés pour s'insérer à l'intérieur de la chambre intérieure (2) lorsqu'ils font saillie vers le bas depuis la zone de cuisson (4) et agencés en parallèle et espacés d'une distance les uns des autres, de préférence espacés les uns des autres de façon régulière,
- les éléments allongés (11) présentent une épaisseur dans la plage de 0,5 à 3 mm, de préférence de 1,0 à 1,5 mm, et
- les éléments allongés (11) s'étendent vers le bas dans la chambre intérieure (2) jusqu'à une distance dans la plage de 2 à 40, de préférence 5 à 20, cm au-dessus de la paroi inférieure (1a).

17. Appareil de cuisson selon une quelconque revendication précédente, dans lequel la zone de cuisson (4) comprend en outre un mécanisme de levage adapté pour, dans une première position, être complètement intégré et rétracté dans la zone de cuisson (4) et en outre adapté pour, dans au moins une seconde position, s'étendre sur une distance au-dessus de la surface supérieure de la zone de cuisson (4).

Figure 1a

EP 3 755 961 B1

Figure 1b

Figure 2

EP 3 755 961 B1

Figure 3

Figure 4

Figure 5

Figure 6

Figure 7

EP 3 755 961 B1

Figure 8 a)

Figure 8 b)

EP 3 755 961 B1

Figure 8 c)

Figure 9

(a) Box type cooker

(b) Flat plate collector indirect cooker

(c) Parabolic reflector direct cooker

(d) Parabolic reflector indirect cooker

Figure 10    Prior art

EP 3 755 961 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3938497 A
- CN 102597649 A
- US 4619244 A
- EP 0221575 A1

**Non-patent literature cited in the description**

- **ADRIAN BEJAN.** Heat Transfer. John Wiley & Sons, 1993
- **PAMWAR et al.** State of the art of solar cooking: An overview. *Renewable and Sustainable Energy Reviews,* 2012, vol. 16, 3776-3785
- **LAMECK NKHONERA et al.** Experimental investigation of a finned pentaerythritol-based heat storage unit for solar cooking at 150-200 °C. *Energy Procedia,* 2016, vol. 93, 160-167